(19) **Europäisches Patentamt / European Patent Office / Office européen des brevets**

(11) **EP 4 769 291 A1**

(12) **EUROPEAN PATENT APPLICATION**
published in accordance with Art. 153(4) EPC

(43) Date of publication:
**01.07.2026 Bulletin 2026/27**

(21) Application number: **24909748.6**

(22) Date of filing: **31.07.2024**

(51) International Patent Classification (IPC):
**G06T 3/4053** (2024.01)

(52) Cooperative Patent Classification (CPC):
**G06T 3/4053; G06T 5/50; G06T 5/70**

(86) International application number:
**PCT/CN2024/108945**

(87) International publication number:
**WO 2025/138794 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.12.2023 CN 202311839967**

(71) Applicant: **INSTITUTE OF BIOPHYSICS, CHINESE ACADEMY OF SCIENCES**
**Chaoyang District**
**Beijing 100101 (CN)**

(72) Inventors:
- **XU, Pingyong**
  **Beijing 100101 (CN)**
- **YUAN, Lin**
  **Beijing 100101 (CN)**
- **HE, Wenting**
  **Beijing 100101 (CN)**
- **XUE, Fudong**
  **Beijing 100101 (CN)**

(74) Representative: **Chung, Hoi Kan**
**Mandarin IP Limited**
**7 Cherry Trees**
**Great Shelford**
**Cambridge CB22 5XA (GB)**

(54) **DENOISING AND DECONVOLUTION SUPER-RESOLUTION IMAGING METHOD AND APPARATUS BASED ON PHOTOSWITCHABLE MOLECULES**

(57) The present disclosure relates to the technical field of biological microscopic imaging. Disclosed are a denoising and deconvolution super-resolution imaging method and apparatus based on photoswitchable molecules, and an electronic device and a computer-readable storage medium. The method comprises: acquiring a plurality of fluorescence image sequences, wherein structures to be imaged of images in the fluorescence image sequences are labeled by photoswitchable fluorescent molecules, each sequence is generated by using photoswitchable characteristics of the photoswitchable fluorescent molecules, and each sequence comprises at least one bright-state image and at least one dark-state image; performing denoising processing on each bright-state image and each dark-state image in the plurality of fluorescence image sequences, so as to obtain denoised images; and performing deconvolution processing on the denoised images, so as to obtain corresponding super-resolution images. The present disclosure has relatively low requirements for an imaging device, can be applied to various imaging techniques, and does not limit the size of an imaging region, such that requirements for large-field imaging of fixed biological samples in application scenarios can be met, thereby realizing large-field super-resolution imaging of fixed cells and tissues.

Acquiring a plurality of fluorescence image sequences, wherein structures to be imaged of images in the fluorescence image sequences are labeled by photoswitchable fluorescent molecules, each sequence is generated by using photoswitchable characteristics of the photoswitchable fluorescent molecules, and each sequence comprises at least one bright-state image and at least one dark-state image — S101

Performing denoising processing on each bright-state image and each dark-state image in the plurality of fluorescence image sequences, so as to obtain denoised images — S102

Performing deconvolution processing on the denoised images, so as to obtain corresponding super-resolution images — S103

FIG. 1

EP 4 769 291 A1

**Description**

CROSS-REFERENCE TO RELATED APPLICATIONS

The present application claims priority to Chinese Patent Application No. 202311839967.4, filed on December 28, 2023 with the China National Intellectual Property Administration, and entitled "DENOISING AND DECONVOLUTION SUPER-RESOLUTION IMAGING METHOD AND APPARATUS BASED ON PHOTOSWITCHABLE MOLECULES", the entire contents of which are incorporated in the present application by reference.

TECHNICAL FIELD

The present disclosure relates to the technical field of biological microscopic imaging, and in particular to a denoising and deconvolution super-resolution imaging method and apparatus based on photoswitchable molecules, an electronic device, and a computer-readable storage medium.

BACKGROUND

Super-resolution imaging technology refers to a process of processing a low-resolution image into a high-resolution image by means of a computer algorithm or model, which enables us to observe more details and obtain a clearer and more realistic visual experience. Various super-resolution imaging technologies in recent years include, for example, stimulated emission depletion microscopy (STED), stochastic optical reconstruction microscopy (STORM), and photoactivated localization microscopy (PALM).

In the fields of biology, medicine, and the like, super-resolution imaging technology have broken through the constraint of the optical diffraction limit, allowing researchers to study the fine features of subcellular structures in cells at the nanoscale resolution level. However, conventional super-resolution imaging technologies require complex devices to achieve imaging, resulting in high imaging costs and small imaging fields of view, which makes it difficult to meet the requirements of imaging of large-field-of-view samples in actual application scenarios.

SUMMARY

In view of the above situation, a denoising and deconvolution super-resolution imaging method and apparatus based on photoswitchable molecules, an electronic device and a computer-readable storage medium are provided according to the embodiments of the present disclosure, aiming to solve or at least partially solve the above-mentioned problems.

In a first aspect, a denoising and deconvolution super-resolution imaging method based on photoswitchable molecules is provided according to an embodiment of the present disclosure. The method comprises:

acquiring a plurality of fluorescence image sequences, wherein structures to be imaged of images in the fluorescence image sequences are labeled by photoswitchable fluorescent molecules, each sequence is generated by using photoswitchable characteristics of the photoswitchable fluorescent molecules, and each sequence comprises at least one bright-state image and at least one dark-state image;
performing denoising processing on each bright-state image and each dark-state image in the plurality of fluorescence image sequences, so as to obtain denoised images; and
performing deconvolution processing on the denoised images, so as to obtain corresponding super-resolution images.

In a second aspect, a denoising and deconvolution super-resolution imaging apparatus based on photoswitchable molecules is provided according to an embodiment of the present disclosure. The apparatus comprises:

an acquisition module, configured to acquire a plurality of fluorescence image sequences, wherein structures to be imaged of images in the fluorescence image sequences are labeled by photoswitchable fluorescent molecules, each sequence is generated by using photoswitchable characteristics of the photoswitchable fluorescent molecules, and each sequence comprises at least one bright-state image and at least one dark-state image;
a denoising module, configured to perform denoising processing on each bright-state image and each dark-state image in the plurality of fluorescence image sequences, so as to obtain denoised images; and
a deconvolution module, configured to perform deconvolution processing on the denoised images, so as to obtain corresponding super-resolution images.

In a third aspect, an electronic device is provided according to an embodiment of the present disclosure. The electronic device comprises: a processor; and a memory configured to store computer-executable instructions, wherein the executable instructions, when executed, cause the processor to perform the steps of the above denoising and deconvolution super-resolution imaging method based on photoswitchable molecules.

In a fourth aspect, a computer-readable storage medium is provided according to an embodiment of the present disclosure, on which one or more programs are stored, wherein the one or more programs, when executed by an electronic device comprising a plurality of application programs, cause the electronic device to perform the steps of the above denoising and deconvolution super-resolution imaging method based on photoswitchable molecules.

With the above technical solutions, a denoising and deconvolution super-resolution imaging method and apparatus based on photoswitchable molecules, an electronic device and a computer-readable storage medium are provided according to the embodiments of the present disclosure. Based on the characteristics of general equipment in the fields of biology, medicine, and the like, the method provides a super-resolution imaging technical solution with high versatility and good robustness. Only with an ordinary wide-field microscope, a plurality of fluorescence image sequences can be acquired based on the principle that photoswitchable fluorescent molecules are modulated by light while noise is not. By performing denoising processing on each bright-state image and each dark-state image in the plurality of fluorescence image sequences, the noise data therein can be effectively removed, so as to obtain denoised images with an extremely high signal-to-noise ratio. Then, deconvolution processing is performed on the denoised images to improve the resolution of the denoised images, so as to obtain corresponding super-resolution images. It can be seen that compared with the prior art, the present solution has lower requirements for imaging device, greatly reducing costs, and does not limit the size of an imaging region, such that requirements for large-field imaging of fixed biological samples in application scenarios can be met, thereby realizing large-field super-resolution imaging of fixed cells and tissues.

The above description is merely an overview of the technical solutions of the present disclosure. Embodiments of the present disclosure are described hereinafter in order for a clear understanding of the technical solutions of the present disclosure so as to implement the technical solutions based on the specification, and further for a clear and easy understanding of the above and other objectives, features and advantages of the present disclosure.

BRIEF DESCRIPTION OF DRAWINGS

The drawings described herein are used to provide a further understanding of the present disclosure, and form a part of the present disclosure. Exemplary embodiments of the present disclosure and the description thereof are used for explaining the present disclosure, and do not constitute any inappropriate limitation to the present disclosure. In the drawings:

FIG. 1 is a flowchart of a denoising and deconvolution super-resolution imaging method based on photoswitchable molecules according to an embodiment of the present disclosure;
FIG. 2 is a flowchart of a denoising and deconvolution super-resolution imaging method based on photoswitchable molecules according to another embodiment of the present disclosure;
FIG. 3 is a timing diagram of laser modulation according to an embodiment of the present disclosure;
FIG. 4 is a comparison diagram of image processing results of direct deconvolution without denoising and deconvolution after denoising, as well as the original image, according to an embodiment of the present disclosure;
FIG. 5 is a schematic structural diagram of a denoising and deconvolution super-resolution imaging apparatus based on photoswitchable molecules according to an embodiment of the present disclosure;
FIG. 6 is a schematic structural diagram of an electronic device according to an embodiment of the present disclosure.

DETAILED DESCRIPTION OF THE EMBODIMENTS

To make the purpose, technical solutions and beneficial effects clearer, the technical solutions of the present disclosure will be clearly and completely described hereinafter in conjunction with the drawings of the embodiments of the disclosure hereinafter. It is apparent that the described embodiments are only some embodiments rather than all embodiments of the present disclosure. All the other embodiments obtained by a person of ordinary skills in the art based on the embodiments of the present disclosure without any creative effort shall fall within the protection scope of the present disclosure.

It should be noted that similar numerals and signs in the following figures represent similar objects. Hence, an item defined for a figure may not be further defined and explained for subsequent figures.

It should be noted that the terms such as "first", "second" and the like in the description, the claims and the drawings of the present disclosure are only used to distinguish similar objects, rather than describe a particular or chronological order. It should be understood that the terms used herein may be exchanged as appropriate, such that the embodiments of the present disclosure described herein can be implemented in an order other than the order shown or described herein. In addition, the term "comprise" and variations thereof are to be construed to mean "comprise but not limited to" open-ended terms.

Super-resolution imaging technology refers to a process of processing a low-resolution image into a high-resolution image by means of a computer algorithm or model, which enables us to observe more details and obtain a clearer and more realistic visual experience. Various super-resolution imaging technologies in recent years include, for example, stimulated emission depletion microscopy (STED), stochastic optical reconstruction microscopy (STORM), and photoactivated localization microscopy (PALM). In the fields of biology, medicine, and the like, super-resolution imaging technology has broken through the constraint of the optical diffraction limit, allowing researchers to study the fine features of subcellular structures in cells at the nanoscale resolution level. However, conventional super-resolution imaging technologies require complex devices to achieve imaging, resulting in high imaging costs and small imaging fields of view, which makes it difficult to meet the requirements of imaging of large-field-of-view samples in actual application scenarios. Based on this, a denoising and deconvolution super-resolution imaging method and apparatus based on photoswitchable molecules, an electronic device and a computer-readable storage medium are provided according to the present disclosure. The present disclosure is described in detail below through specific embodiments.

To facilitate understanding the present disclosure, a denoising and deconvolution super-resolution imaging method based on photoswitchable molecules in the embodiments of the present disclosure is first illustrated in detail. The executing subject of the denoising and deconvolution super-resolution imaging method based on photoswitchable molecules according to the embodiments of the present disclosure is generally a computer device with a certain computing capability. The computer device includes, for example, a terminal device, a server or other processing devices. The terminal device may be user equipment (UE), a mobile device, a user terminal, a terminal and the like. In some possible implementations, the denoising and deconvolution super-resolution imaging method based on photoswitchable molecules may be implemented by a processor invoking computer-readable instructions stored in a memory.

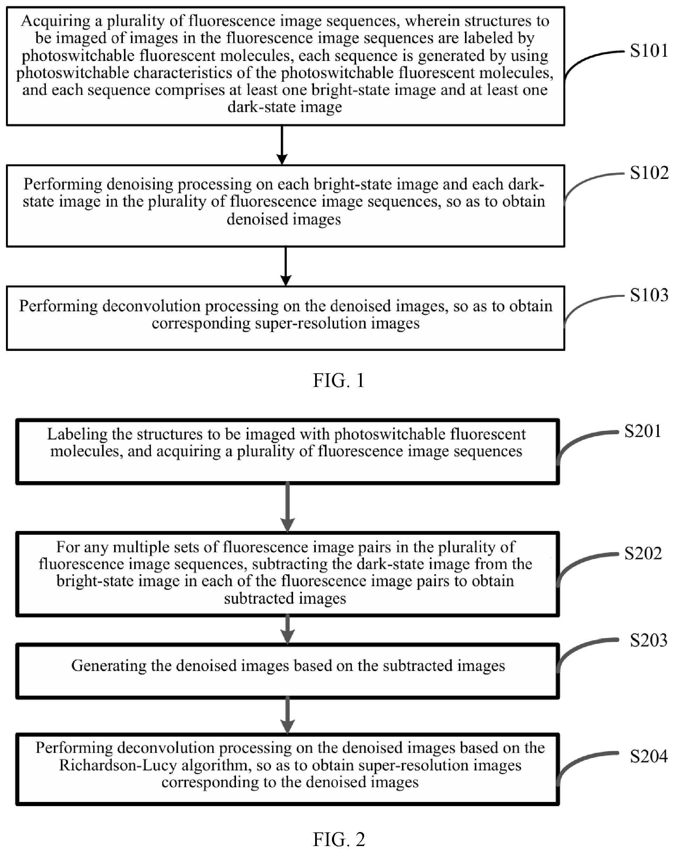

FIG. 1 is a flowchart of a denoising and deconvolution super-resolution imaging method based on photoswitchable molecules according to an embodiment of the present disclosure. As shown in FIG. 1, the method at least includes steps S101 to S103.

In step S101, a plurality of fluorescence image sequences are acquired, wherein structures to be imaged of images in the fluorescence image sequences are labeled by photoswitchable fluorescent molecules, each sequence is generated by using photoswitchable characteristics of the photoswitchable fluorescent molecules, and each sequence comprises at least one bright-state image and at least one dark-state image.

A photoswitchable fluorescent molecule refers to a molecule that can undergo reversible changes in structure and properties under light stimulation. The photoswitchable characteristics of the photoswitchable fluorescent molecules refer to the fact that a photoswitchable fluorescent molecule can achieve switching between the bright state and the dark state under different light conditions, i.e., under irradiation with a specific wavelength, the photoswitchable fluorescent molecule is in the "on" state, i.e., the bright or luminescent state; and under irradiation with another specific wavelength, the photoswitchable fluorescent molecule is in the "off" state, i.e., the dark or non-luminescent state.

In an implementation, after the structures to be imaged are labeled by the photoswitchable fluorescent molecules, the structures to be imaged are irradiated by the modulated light. When the photoswitchable fluorescent molecules are in a luminescent state, the fluorescence images are acquired by using a wide-field microscope, to obtain one or more bright-state images. Since the structures to be imaged are labeled by the photoswitchable fluorescent molecules, each bright-state image contains signal data and noise data generated by the structures to be imaged, wherein the noise data comprises Gaussian noise, Poisson noise, sample autofluorescence, and the like. When most of the photoswitchable fluorescent molecules are in a non-luminescent state, the fluorescence images are acquired to obtain one or more dark-state images. Each dark-state image contains weak signal data and noise data. Finally, a plurality of fluorescence image sequences may be acquired, such as fluorescence image sequence a: bright-state image a1, dark-state image a2; fluorescence image sequence b: bright-state image b1, bright-state image b2, dark-state image b3; fluorescence image sequence c: bright-state image c1, bright-state image c2, dark-state image c3, dark-state image c4. The number of fluorescence image sequences can be set according to actual requirements, which is not limited in the embodiments of the present disclosure. For example, the number can be set to 500. The structures to be imaged of images in the fluorescence image sequences are cellular structures observed by a fluorescence microscope, including but not limited to endoplasmic reticulum, mitochondria, chloroplasts, centrosomes, Golgi apparatus, morphology of cell nucleolus, ribosomes, lysosomes, and the like.

In step S102, denoising processing is performed on each bright-state image and each dark-state image in the plurality of fluorescence image sequences, so as to obtain denoised images.

It has been found that, for a blurred image completely free of noise, a completely recovered original image of the blurred image can be obtained by means of deconvolution. However, in an actual imaging process, due to the influence of uncertain factors such as optical system noise and point spread function, the deconvolution algorithm often leads to many artifacts in the image. Moreover, as the number of deconvolution iterations increases, the noise signal may be amplified, and the deconvolution may further bring more artifacts to the image.

Based on this, in this step, by first processing each bright-state image and each dark-state image in the plurality of fluorescence image sequences, noise data in the image can be removed, and signal data generated by the structures to be imaged of images is retained, so as to obtain denoised images with a relatively high signal-to-noise ratio.

In step S103, deconvolution processing is performed on the denoised images, so as to obtain corresponding super-resolution images.

After the denoised images are acquired, the deconvolution processing is performed on the denoised images, so as to obtain super-resolution images corresponding to the denoised images. In an implementation, for example, deconvolution processing may be performed on the denoised images by direct deconvolution to obtain the corresponding super-resolution images. Deconvolution processing may also be performed on the denoised images by iterative deconvolution to obtain the denoised images. The manner of deconvolution processing is not limited in the embodiments of the present disclosure.

In this step, since the denoised images have a relatively high signal-to-noise ratio, performing a deconvolution operation on the denoised images can suppress reconstruction artifacts while improving resolution, thereby obtaining high-quality super-resolution images.

As can be seen from the method shown in FIG. 1, an embodiment of the present disclosure provides a super-resolution imaging technical solution with high versatility and good robustness according to the characteristics of general equipment in the fields of biology, medicine, and the like. Only with an ordinary wide-field microscope, a plurality of fluorescence image sequences can be acquired based on the principle that photoswitchable fluorescent molecules are modulated by light while noise is not. By performing denoising processing on each bright-state image and each dark-state image in the plurality of fluorescence image sequences, the noise data therein can be effectively removed, so as to obtain denoised images with an extremely high signal-to-noise ratio. Then, deconvolution processing is performed on the denoised images to improve the resolution of the denoised images, so as to obtain corresponding super-resolution images. It can be seen that compared with the prior art, the present solution has lower requirements for imaging devices, greatly reducing costs, and does not limit the size of an imaging region, such that requirements for large-field imaging of fixed biological samples in application scenarios can be met, thereby realizing large-field super-resolution imaging of fixed cells and tissues.

Further, to better illustrate the process of the above denoising and deconvolution super-resolution imaging method based on photoswitchable molecules, as a detailed elaboration and extension of the above embodiments, the embodiments of the present application provide several alternative embodiments, but are not limited thereto, as specifically described below.

For step S101,
a plurality of fluorescence image sequences may be acquired first. Specifically, in an embodiment, the fluorescence image sequences are acquired by an optical imaging technology. The optical imaging technology comprises: wide-field fluorescence microscopic imaging technology, confocal fluorescence microscopic imaging technology, spinning disk confocal microscopic imaging technology, structured illumination imaging technology, optical fluctuation super-resolution imaging technology, photoacoustic imaging technology, or the like.

In an embodiment, in step S101, the photoswitchable fluorescent moleculescomprise fluorescent proteins with photoswitchable properties, fluorescent dyes or quantum dots with photoswitchable properties. In this embodiment, with respect to the fluorescent proteins with photoswitchable properties, specifically, the fluorescent proteins with photoswitchable properties have two states of light modulation response, bright state and dark state, and comprise photoswitchable fluorescent proteins, reversible photoswitchable fluorescent proteins, photo-blinking fluorescent proteins, or the like. In an embodiment, the photoswitchable fluorescent proteins comprise Skylan-S, rsEGFP 2, Dronpa, or the like. Herein, Skylan-S (a novel photoswitchable protein) is a monomer that can be used for live-cell imaging and has extremely high optical stability and switching characteristics. rsEGFP 2 (reversibly switchable enhanced green fluorescent protein 2) is characterized by easy crystallization and excellent optical properties. Dronpa (an erasable optical protein) is a monomeric fluorescent protein extracted from Pectiniidae (a stony coral), and exhibits distinctive photochromic properties, enabling fluorescence switching between on and off states controlled by two different excitation lights.

In an embodiment, for the fluorescent dyes with photoswitchable characteristics, specifically, the fluorescent dyes with photoswitchable characteristics comprise photoswitchable dyes, photo-blinking fluorescent dyes, or the like. In an implementation, the fluorescent dyes with photoswitchable characteristics may include, for example, fluorescein, cyanine dyes, rhodamine fluorescent dyes, or the like. It should be noted that the types of fluorescent proteins with photoswitchable properties and the fluorescent dyes with photoswitchable properties are not limited in the embodiments of the present disclosure.

The quantum dots, also known as semiconductor nanocrystals, can confine electrons within an extremely tiny three-dimensional space, thereby restricting electron movement. Applying a certain electric field or light irradiation to them will cause them to emit light of a specific frequency. The luminescence frequency varies with the change in particle size. Thus, the color of the emitted light can be controlled by adjusting the size of quantum dots.

In an embodiment, in the above method, the types of light emitted by the photoswitchable fluorescent molecules comprise blue light, green light, yellow light, red light, far infrared wavelength light, or the like. The types of light emitted by the photoswitchable fluorescent molecules are not limited in the embodiments of the present disclosure.

In an embodiment, in the above method, the photoswitchable fluorescent molecules label the structures to be imaged in the following manner AI/manner A2.

In manner A1, the photoswitchable fluorescent molecules label the structures to be imaged by means of molecular cloning.

In manner A2, the photoswitchable fluorescent molecules label the structures to be imaged by binding with a target antibody, wherein the target antibody specifically binds to the structures to be imaged.

In this embodiment, the type of the target antibody may include a conventional antibody and a nanobody. Exemplarily, the photoswitchable fluorescent molecule A can be used for fusion expression with the structures to be imaged (referring to the construction of a fusion gene by linking an exogenous protein gene to the 3' end of another gene for expression) by means of the molecular cloning method (a method for purifying and amplifying specific DNA fragments at the molecular level) to label the structures to be imaged. The structures to be imaged may also be labeled by binding the photoswitchable fluorescent molecule B with nanobody C, wherein the target antibody C specifically binds to the structures to be imaged. It should be noted that the examples provided herein are for illustrative purposes only and do not limit the embodiments of the present disclosure.

For step S102,
after the plurality of fluorescence image sequences are acquired, denoising processing may be performed on the plurality of fluorescence image sequences, so as to obtain denoised images. Specifically, in an embodiment, denoising processing is performed on each bright-state image and each dark-state image in the plurality of fluorescence image sequences to obtain denoised images by means of the following manner B1/manner B2.

In manner B1, for any multiple sets of fluorescence image pairs in the plurality of fluorescence image sequences, the dark state image is subtracted from the right state image in the fluorescence image pairs to obtain subtracted images; and the denoised images are generated based on the subtracted images.

In manner B2, the plurality of fluorescence image sequences is processed by using an optical lock-in amplification algorithm to obtain the denoised images. In this embodiment, for manner B1, for any multiple sets of fluorescence image pairs in the plurality of fluorescence image sequences, the pixel values of the corresponding pixels in the bright-state image and the dark-state image in each of the fluorescence image pairs may be subtracted to obtain subtracted images, and then the denoised images are generated based on the subtracted images. Exemplarily, the plurality of fluorescence image sequences includes fluorescence image sequence d and fluorescence image sequence e. For the fluorescence image sequence d, the pixel values of the corresponding pixels of the bright-state image d1 and the dark-state image d2 in the fluorescence image sequence d may be subtracted to obtain the subtracted image 1. For the fluorescence image sequence e, the pixel values of the corresponding pixels of the bright-state image e1 and the dark-state image e3 in the fluorescence image sequence e are subtracted to obtain the subtracted image 2. Then, weighted average processing may be performed on each second subtracted image to obtain a denoised image. For example, the weights of the subtracted images 1 and 2 may both be set to 1/2, and then the pixel value of each pixel in the denoised image = 1/2 of the pixel value of each pixel in the subtracted image 1 + 1/2 of the pixel value of each pixel in the subtracted image 2. The weight of each subtracted image may be set according to actual requirements, which is not limited in the embodiments of the present disclosure. It should be noted that examples provided herein are for illustrative purposes only and do not limit the embodiments of the present disclosure.

For manner B2, exemplarily, the fluorescence image sequence f, the fluorescence image sequence j, the fluorescence image sequence h, and the fluorescence image sequence i may be processed by using an optical lock-in amplification algorithm (OLID algorithm) to obtain denoised images. It should be noted that the examples provided herein are for illustrative purposes only and do not limit the embodiments of the present disclosure.

For step S103,
after the denoised images are acquired, the deconvolution processing may be performed on the denoised images to obtain corresponding super-resolution images. Specifically, in an embodiment, the performing deconvolution processing on the denoised images, so as to obtain corresponding super-resolution images comprises:

performing deconvolution processing on the denoised images based on the Richardson-Lucy algorithm, so as to obtain super-resolution images corresponding to the denoised images.

In an implementation, the system point spread function may be determined according to the following formula (1):

$$PSF(\rho) = I_0 \left[ \frac{2J_1\left(\frac{2\pi}{\lambda}NA\rho\right)}{\frac{2\pi}{\lambda}NA\rho} \right]^2$$

$$(1) \, ;$$

wherein $I_0$ is a normalization coefficient, $J_1$ is the Bessel function of the first kind, $\lambda$ is the wavelength, NA denotes the numerical aperture, and p denotes the polar distance in a polar coordinate system. When the fluorescence emitted by the sample passes through the optical system, due to the effect of diffraction, the image formed on the camera is the convolution of the fluorescence emitted by the sample and the system point spread function. Therefore, to better conform to the diffraction process of the optical system, the Bessel function of the first kind can be used to represent the system point spread function.

Considering the influence of noise in imaging, an excessive number of deconvolution iterations may generate artifacts, while an insufficient number fails to improve image resolution effectively. Therefore, the number of deconvolution iterations can be determined based on the quality of the denoised images. Specifically, the number of iterations may be determined by calculating the Fourier Ring Correlation (FRC) resolution of two consecutive frames of images in the actual sample, so as to ensure that the image resolution is maximized and no obvious reconstruction artifacts are present.

In an embodiment, in the above method, the imaging object of the method comprises fixed cells, fixed tissues, and the like.

FIG. 2 is a flowchart of a denoising and deconvolution super-resolution imaging method based on photoswitchable molecules according to another embodiment of the present disclosure. As shown in FIG. 2, the present embodiment includes the following steps S201 to S204.

In step 201, the structures to be imaged are labeled by photoswitchable fluorescent molecules, and a plurality of fluorescence image sequences are acquired. Each fluorescence image sequence comprises at least one bright-state image and at least one dark-state image. In an implementation, the fluorescence image sequences are acquired by an optical imaging technology. The optical imaging technology comprises: wide-field fluorescence microscopic imaging technology, confocal fluorescence microscopic imaging technology, spinning disk confocal microscopic imaging technology, structured illumination imaging technology, optical fluctuation super-resolution imaging technology, photoacoustic imaging technology, or the like. The photoswitchable fluorescent molecules comprise fluorescent proteins with photoswitchable properties, fluorescent dyes or quantum dots with photoswitchable properties. The fluorescent proteins with photoswitchable properties have two states of light modulation response, bright state and dark state, and comprise photoswitchable fluorescent proteins, reversible photoswitchable fluorescent proteins, photo-blinking fluorescent proteins, or the like. The photoswitchable fluorescent proteins comprise Skylan-S, rsEGFP 2 or Dronpa, or the like. The fluorescent dyes with photoswitchable properties comprise photoswitchable dyes, photo-blinking fluorescent dyes, or the like. The types of light emitted by the photoswitchable fluorescent molecules comprise blue light, green light, yellow light, red light, far infrared wavelength light, or the like. The structures to be imaged of images are labeled by photoswitchable fluorescent molecules. For example, the photoswitchable fluorescent molecules may label the structures to be imaged by means of molecular cloning. For another example, the photoswitchable fluorescent molecules label the structures to be imaged by binding with a target antibody, wherein the target antibody specifically binds to the structures to be imaged. In an implementation, the imaging object, i.e., the structure to be imaged, comprises fixed cells, fixed tissues, and the like.

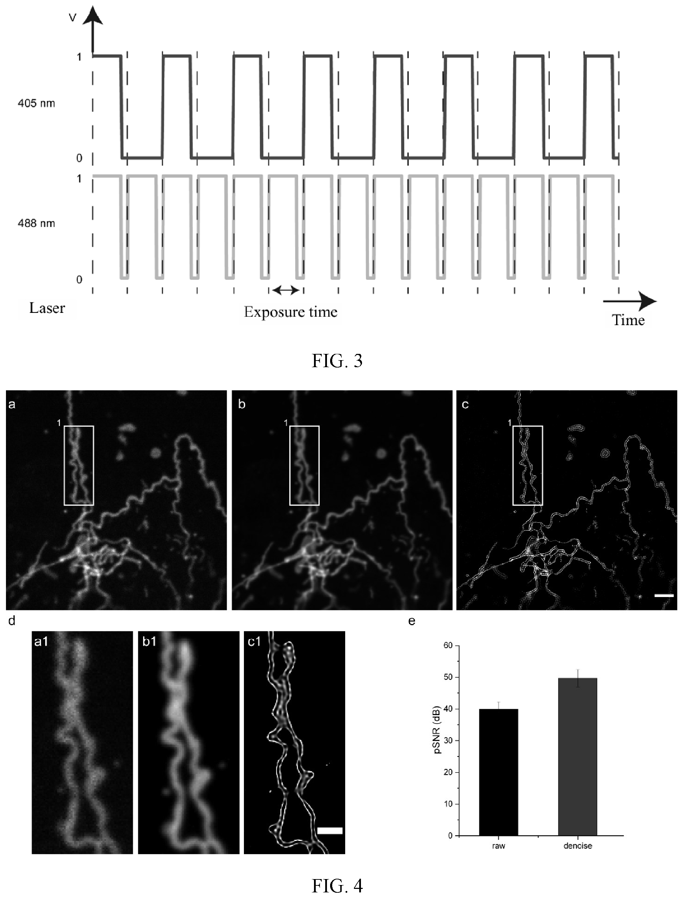

Taking the photoswitchable fluorescent protein as an example, details of acquiring a plurality of fluorescence image sequences of a target molecule are described below. First, by means of cell transfection technology (referring to the technology of introducing exogenous molecules such as DNA, RNA into eukaryotic cells), F-actin and photoswitchable fluorescent protein (RSFP) are fused and expressed in eukaryotic cells: human osteosarcoma cell line U-2 OS. After 36 hours, the cytoskeleton is fixed with a fixative, and fluorescent images are collected using a self-made or commercial fluorescent microscopy imaging platform. For example, the model of the microscope's main body is Model A, using a 405 nm laser and a 488 nm laser, as well as a 150 ×, 1.45 NA objective lens; the camera model is Model B, with the pixel size of 6.5 $\mu$m. FIG. 3 is a timing diagram of laser modulation according to an embodiment of the present disclosure. Referring to the laser modulation mode shown in FIG. 3, the 405 nm laser and the 488 nm laser can be turned on simultaneously, and the 405 nm laser is turned off after starting image capture to obtain an image sequence; the 488 nm laser is turned on, and the 405 nm laser is turned on after starting image capture to obtain an image sequence. Finally, a series of fluorescence images with repeatedly switching states can be obtained, that is, a plurality of fluorescence image sequences.

In step 202, for any multiple sets of fluorescence image pairs in the plurality of fluorescence image sequences, the dark-state image is subtracted from the bright-state image in each of the fluorescence image pairs to obtain subtracted images.

In step 203, the denoised images are generated based on the subtracted images. In an implementation, the plurality of fluorescence image sequences may also be processed by using an optical lock-in amplification algorithm to obtain the denoised images.

In step 204, deconvolution processing is performed on the denoised images based on the Richardson-Lucy algorithm, so as to obtain super-resolution images corresponding to the denoised images.

FIG. 4 is a comparison diagram of image processing results of direct deconvolution without denoising and deconvolution after denoising, as well as the original image, according to an embodiment of the present disclosure. Wherein a corresponds to a wide-field image, b corresponds to an image obtained by direct deconvolution of the wide-field image, c corresponds to an image obtained by deconvolution after denoising, a1 is a corresponding enlarged view of a, b1 is a corresponding enlarged view of b, and c1 is a corresponding enlarged view of c (scale bars: 2 μm (a); 1 μm (b)), and e is a comparison diagram of the image signal-to-noise ratios between direct deconvolution without denoising and deconvolution after denoising. As shown in FIG. 4, it can be seen from a and c that the image processed by deconvolution after denoising is clearer, indicating higher image resolution and fewer artifacts. It can be seen from e that the image processed by deconvolution after denoising has a higher signal-to-noise ratio, which indicates higher resolution. Thus, the denoised images obtained based on the photoswitchable characteristics of the photoswitchable molecules has extremely low noise. Subsequent deconvolution processing of the denoised images can greatly improve the spatiotemporal resolution thereof, thereby obtaining super-resolution imaging images.

Those skilled in the art can understand that the serial numbers of the steps in the above method in the embodiments do not represent a performing sequence, nor do they constitute any limitation on the implementation process. The performing sequence of each step is determined based on the function and internal logic thereof.

It should be noted that, in practical applications, all possible embodiments described above can be combined in any combination to form possible embodiments of the present disclosure, which are not described in detail herein.

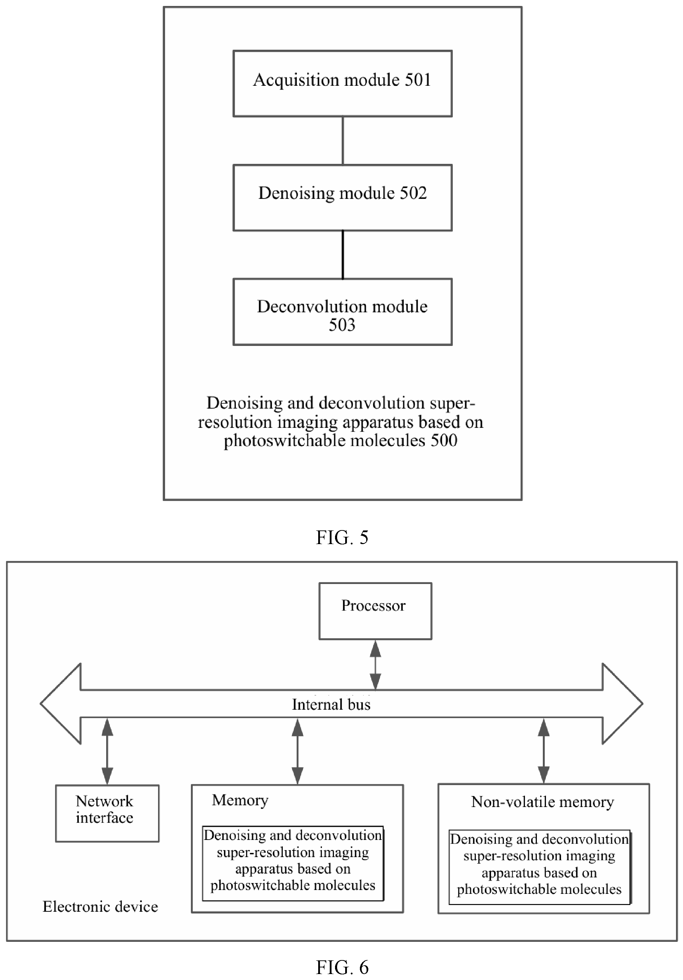

Based on the same concept, a denoising and deconvolution super-resolution imaging apparatus based on photoswitchable molecules is further provided according to an embodiment of the present disclosure. FIG. 5 is a schematic structural diagram of a denoising and deconvolution super-resolution imaging apparatus based on photoswitchable molecules according to an embodiment of the present disclosure. As shown in FIG. 5, the denoising and deconvolution super-resolution imaging apparatus based on photoswitchable molecules 500 according to an embodiment of the present disclosure comprises:

an acquisition module 501, configured to acquire a plurality of fluorescence image sequences, wherein structures to be imaged of images in the fluorescence image sequences are labeled by photoswitchable fluorescent molecules, each sequence is generated by using photoswitchable characteristics of the photoswitchable fluorescent molecules, and each sequence comprises at least one bright-state image and at least one dark-state image;

a denoising module 502, configured to perform denoising processing on each bright-state image and each dark-state image in the plurality of fluorescence image sequences, so as to obtain denoised images; and

a deconvolution module 503, configured to perform deconvolution processing on the denoised images, so as to obtain corresponding super-resolution images.

In an embodiment, in the above apparatus, the photoswitchable fluorescent molecules comprise fluorescent proteins with photoswitchable properties, fluorescent dyes or quantum dots with photoswitchable properties.

In an embodiment, in the above apparatus, the fluorescent proteins with photoswitchable properties have two states of light modulation response, bright state and dark state, and comprise photoswitchable fluorescent proteins, reversible photoswitchable fluorescent proteins, photo-blinking fluorescent proteins, or the like.

In an embodiment, in the above apparatus, the photoswitchable fluorescent proteins comprise Skylan-S, rsEGFP 2, Dronpa, or the like.

In an embodiment, in the above apparatus, the fluorescent dyes with photoswitchable properties comprise photoswitchable dyes, photo-blinking fluorescent dyes, or the like.

In an embodiment, in the above apparatus, the types of light emitted by the photoswitchable fluorescent molecules comprise blue light, green light, yellow light, red light, far infrared wavelength light, or the like.

In an embodiment, in the above apparatus, the photoswitchable fluorescent molecules label the structures to be imaged in the following manners:

the photoswitchable fluorescent molecules label the structures to be imaged by means of molecular cloning; or

the photoswitchable fluorescent molecules label the structures to be imaged by binding with a target antibody, wherein the target antibody specifically binds to the structures to be imaged.

In an embodiment, in the above apparatus, the fluorescence image sequences are acquired by an optical imaging technology. The optical imaging technology comprises: wide-field fluorescence microscopic imaging technology, confocal fluorescence microscopic imaging technology, spinning disk confocal microscopic imaging technology, structured illumination imaging technology, optical fluctuation super-resolution imaging technology, photoacoustic imaging technology, or the like.

In an embodiment, in the above apparatus, the denoising module 502 is configured to:

for any multiple sets of fluorescence image pairs in the plurality of fluorescence image sequences, subtract the dark-state image from the bright-state image in each of the fluorescence image pairs to obtain subtracted images; and generate the denoised images based on the subtracted images; or

process the plurality of fluorescence image sequences by using an optical lock-in amplification algorithm to obtain the denoised images.

In an embodiment, in the above apparatus, the deconvolution module 503 is configured to:
perform deconvolution processing on the denoised images based on the Richardson-Lucy algorithm, so as to obtain super-resolution images corresponding to the denoised images.

In an embodiment, in the above apparatus, the imaging object of the method comprises fixed cells, fixed tissues, and the like.

It should be noted that any one of the denoising and deconvolution super-resolution imaging apparatus based on photoswitchable molecules may implement the denoising and deconvolution super-resolution imaging method based on photoswitchable molecules in one-to-one correspondence, which is not described here.

FIG. 6 is a schematic structural diagram of an electronic device according to an embodiment of the present disclosure. As shown in FIG. 6, on the hardware level, the electronic device includes a processor, and further includes an internal bus, a network interface and a memory in an embodiment. The memory may include an internal memory, such as a high-speed random-access memory (RAM), and may further include a non-volatile memory, such as at least one disk memory. The electronic device may also include hardware required by other services.

The processor, the network interface and the memory may be connected to each other through the internal bus, which may be an ISA (Industry Standard Architecture) bus, a PCI (Peripheral Component Interconnect) bus or an EISA (Extended Industry Standard Architecture) bus and the like. The bus may be an address bus, a data bus, a control bus and the like. For ease of representation, in FIG. 6, the bus is represented by a two-way arrow. However, it does not mean that there is only one bus or one type of bus.

The memory is configured to store a program. Specifically, the program may include program codes, and the program codes include computer operation instructions. The memory may include an internal memory and a non-volatile memory, and provide the instructions and data to the processor.

The processor reads the corresponding computer program from the non-volatile memory into the memory and then runs it, and forms a denoising and deconvolution super-resolution imaging apparatus based on photoswitchable molecules on logic level. The processor executes the program stored in the memory, and is specifically used to implement the above method.

The processor may be an integrated circuit chip having a signal processing capability. During an implementation process, a step of the above method may be completed by an integrated logic circuit in a form of hardware in the processor or through software instructions. The above processor may be a general-purpose processor, such as a Central Processing Unit (CPU), a Network Processor (NP), a Digital Signal Processor (DSP), an Application Specific Integrated Circuit (ASIC), a Field-Programmable Gate Array (FPGA) or any other programmable logic device, discrete gate, transistor logic device, or discrete hardware component. The processor may implement or execute the method, steps and logical block diagrams disclosed in the embodiments of the present disclosure. The general processor may be a microprocessor, a conventional processor, or the like. Steps of the method disclosed in combination with the embodiments of the present disclosure may be directly implemented by a hardware decoding processor or implemented by a combination of a hardware module and a software module in the decoding processor. The software module may be located in a mature storage medium in the field such as a random-access memory, a flash memory, a read-only memory, a programmable read-only memory, an electrically erasable programmable memory, or a register. The storage medium is in the memory, and the processor reads information in the memory and performs the steps of the above method in combination with hardware.

The electronic device may implement the denoising and deconvolution super-resolution imaging method based on photoswitchable molecules according to the embodiments of the present disclosure, and implement the functions of the denoising and deconvolution super-resolution imaging apparatus based on photoswitchable molecules according to the embodiment shown in FIG. 5, which is not repeated herein.

A computer-readable storage medium is further provided according to an embodiment of the present disclosure, which stores one or more programs. The one or more programs include instructions. The instructions, when executed by an electronic device including a plurality of application programs, can cause the electronic device to implement the denoising and deconvolution super-resolution imaging method based on photoswitchable molecules according to the embodiments of the present disclosure.

It should be understood by those skilled in the art that the embodiments of the present disclosure may be implemented as a method, a system or a computer program product. Therefore, the present disclosure can take the form of an entire hardware embodiment, an entire software embodiment, or an embodiment combining software and hardware aspects. Further, the present disclosure may be implemented in a form of a computer program product implemented on one or more computer-usable storage media (including but not limited to a disk memory, a CD-ROM, an optical memory and the like) including computer-executable program codes.

The present disclosure is described with reference to flowcharts and/or block diagrams of the method, the device (the system), and the computer program product according to the embodiments of the present disclosure. It should be understood that each flow and/or block in the flowcharts and/or block diagrams and a combination of a flow and/or a block in the flowcharts and/or block diagrams may be implemented by computer program instructions. The computer program instructions may be provided to a general computer, a dedicated computer, an embedded processor or processors of other programmable data processing devices to generate a machine, such that the instructions executed by the computer or the processors of the other programmable data processing devices generate an apparatus for implementing functions specified in one or more flows in the flowcharts and/or one or more blocks in the block diagrams.

The computer program instructions may also be stored in a computer readable memory which can guide the computer or other programmable data processing devices to operate in a specific manner, such that the instructions stored in the computer readable memory generate a product including an instruction apparatus which implements functions specified in one or more flows in the flowcharts and/or one or more blocks in the block diagrams.

The computer program instructions may also be loaded onto the computer or other programmable data processing devices, so that the computer or the other programmable data processing device performs a series of operations to perform computer-implemented processing. Thus, instructions executed on the computer or the other programmable devices provide steps for implementing functions specified in one or more flows in the flowcharts and/or one or more blocks in the block diagrams.

In a typical configuration, a computing device includes one or more processors (CPU), an input/output interface, a network interface and a memory.

The memory may include a non-permanent memory, a random-access memory (RAM), and/or a non-volatile memory in the computer readable medium, such as a read-only memory (ROM) or a flash RAM. The memory is an example of a computer-readable storage medium.

The computer readable medium includes a persistent and non-persistent, and removable and non-removable medium. Information may be stored with any methods or technologies. The information may be computer readable instructions, a data structure, a program module, or other data. The storage medium of the computer may include but is not limited to a phase-change random-access memory (PRAM), a static random-access memory (SRAM), a dynamic random-access memory (DRAM), other types of random-access memory (RAM), a read-only memory (ROM), an electrically erasable programmable read-only memory (EEPROM), a flash memory or other memories, a compact disk read-only memory (CD-ROM), a digital versatile disc (DVD), or other optical storage device, a cassette tape, a tape disk memory or other magnetic storage, or any non-transmission medium which can be used for storing information accessible by the computer. According to the definition of the present application, the computer readable medium does not include transitory media, such as a modulated data signal and a carrier.

It should be noted that the terms "comprise", "include", or any other variants thereof are intended to encompass a non-exclusive inclusion, such that a process, method, article, or device including a series of elements includes not only those elements but also elements that are not explicitly listed, or elements that are inherent to such process, method, article, or device. Unless explicitly limited, the statement "including a..." does not exclude the case that other similar elements may exist in the process, the method, the article or the device other than enumerated elements.

It should be understood by those skilled in the art that the embodiments of the present disclosure may be implemented as methods, systems or computer program products. Therefore, the present disclosure may be implemented by only hardware embodiments, only software embodiments or embodiments combining software with hardware. Further, the present disclosure may be implemented in a form of a computer program product implemented on one or more computer-usable storage media (including but not limited to a disk memory, a CD-ROM, an optical memory and the like) including computer-executable program codes.

The embodiments of the present disclosure are described above and the embodiments are not intended to limit the present disclosure. Those skilled in the art can make various modifications and variations to the present disclosure. Any modifications, equivalent substitutions, improvements and the like made within the spirit and the principle of the present disclosure fall within the scope of the claims of the present disclosure.

**Claims**

1. A denoising and deconvolution super-resolution imaging method based on photoswitchablemolecules, comprising:

   acquiring a plurality of fluorescence image sequences, wherein structures to be imaged of images in the fluorescence image sequences are labeled by photoswitchable fluorescent molecules, each sequence is generated by using photoswitchable characteristics of the photoswitchable fluorescent molecules, and each sequence comprises at least one bright-state image and at least one dark-state image;
   performing denoising processing on each bright-state image and each dark-state image in the plurality of fluorescence image sequences, so as to obtain denoised images; and
   performing deconvolution processing on the denoised images, so as to obtain corresponding super-resolution images.

2. The denoising and deconvolution super-resolution imaging method based on photoswitchable molecules according to claim 1, wherein the photoswitchable fluorescent molecules comprise fluorescent proteins with photoswitchable properties, fluorescent dyes or quantum dots with photoswitchable properties.

3. The denoising and deconvolution super-resolution imaging method based on photoswitchable molecules according to claim 2, wherein the fluorescent proteins with photoswitchable properties have two states of light modulation response, bright state and dark state, and comprise photoswitchable fluorescent proteins, reversible photoswitchable fluorescent proteins, photo-blinking fluorescent proteins or fluorescent proteins capable of entering a dark state via photobleaching.

4. The denoising and deconvolution super-resolution imaging method based on photoswitchable molecules according to claim 3, wherein the photoswitchable fluorescent proteins comprise Skylan-S, rsEGFP 2, or Dronpa.

5. The denoising and deconvolution super-resolution imaging method based on photoswitchable molecules according to claim 2, wherein the fluorescent dyes with photoswitchable properties comprise photoswitchable dyes or photo-blinking fluorescent dyes.

6. The denoising and deconvolution super-resolution imaging method based on photoswitchable molecules according to claim 1, wherein the types of light emitted by the photoswitchable fluorescent molecules comprise blue light, green light, yellow light, red light or far infrared wavelength light.

7. The denoising and deconvolution super-resolution imaging method based on photoswitchable molecules according to claim 1, wherein the photoswitchable fluorescent molecules label the structures to be imaged in the following manners:

the photoswitchable fluorescent molecules label the structure to be imaged by means of molecular cloning; or
the photoswitchable fluorescent molecules label the structure to be imaged by binding with a target antibody, wherein the target antibody specifically binds to the structures to be imaged.

8. The denoising and deconvolution super-resolution imaging method based on photoswitchable molecules according to claim 1, wherein the fluorescence image sequences are acquired by an optical imaging technology, and the optical imaging technology comprises: wide-field fluorescence microscopic imaging technology, confocal fluorescence microscopic imaging technology, spinning disk confocal microscopic imaging technology, structured illumination imaging technology, optical fluctuation super-resolution imaging technology or photoacoustic imaging technology.

9. The denoising and deconvolution super-resolution imaging method based on photoswitchable molecules according to claim 1, wherein the performing denoising processing on each bright-state image and each dark-state image in the plurality of fluorescence image sequences, so as to obtain denoised images comprises:

for any multiple sets of fluorescence image pairs in the plurality of fluorescence image sequences, subtracting the dark-state image from the bright-state image in each of the fluorescence image pairs to obtain subtracted images; and generating the denoised images based on the subtracted images; or
processing the plurality of fluorescence image sequences by using an optical lock-in amplification algorithm to obtain the denoised images.

10. The denoising and deconvolution super-resolution imaging method based on photoswitchable molecules according to claim 1, wherein the performing deconvolution processing on the denoised images, so as to obtain corresponding super-resolution images comprises:
performing deconvolution processing on the denoised images based on the Richardson-Lucy algorithm, so as to obtain super-resolution images corresponding to the denoised images.

11. The denoising and deconvolution super-resolution imaging method based on photoswitchable molecules according to any one of claims 1-10, wherein the imaging object of the method comprises fixed cells and fixed tissues.

12. A denoising and deconvolution super-resolution imaging apparatus based on photoswitchable molecules, comprising:

an acquisition module, configured to acquire a plurality of fluorescence image sequences, wherein structures to be imaged of images in the fluorescence image sequences are labeled by photoswitchable fluorescent molecules, each sequence is generated by using photoswitchable characteristics of the photoswitchable fluorescent molecules, and each sequence comprises at least one bright-state image and at least one dark-state image;
a denoising module, configured to perform denoising processing on each bright-state image and each dark-state image in the plurality of fluorescence image sequences, so as to obtain denoised images; and
a deconvolution module, configured to perform deconvolution processing on the denoised images, so as to obtain corresponding super-resolution images.

13. An electronic device, comprising:

a processor; and
a memory configured to store computer-executable instructions, wherein the executable instructions, when executed, cause the processor to perform the steps of the method according to any one of claims 1-11.

14. A computer-readable storage medium, on which one or more programs are stored, wherein the one or more programs, when executed by an electronic device comprising a plurality of application programs, cause the electronic device to perform the steps of the method according to any one of claims 1-11.

Acquiring a plurality of fluorescence image sequences, wherein structures to be imaged of images in the fluorescence image sequences are labeled by photoswitchable fluorescent molecules, each sequence is generated by using photoswitchable characteristics of the photoswitchable fluorescent molecules, and each sequence comprises at least one bright-state image and at least one dark-state image — S101

Performing denoising processing on each bright-state image and each dark-state image in the plurality of fluorescence image sequences, so as to obtain denoised images — S102

Performing deconvolution processing on the denoised images, so as to obtain corresponding super-resolution images — S103

FIG. 1

Labeling the structures to be imaged with photoswitchable fluorescent molecules, and acquiring a plurality of fluorescence image sequences — S201

For any multiple sets of fluorescence image pairs in the plurality of fluorescence image sequences, subtracting the dark-state image from the bright-state image in each of the fluorescence image pairs to obtain subtracted images — S202

Generating the denoised images based on the subtracted images — S203

Performing deconvolution processing on the denoised images based on the Richardson-Lucy algorithm, so as to obtain super-resolution images corresponding to the denoised images — S204

FIG. 2

FIG. 3

FIG. 4

Acquisition module 501

Denoising module 502

Deconvolution module 503

Denoising and deconvolution super-resolution imaging apparatus based on photoswitchable molecules 500

FIG. 5

Processor

Internal bus

Network interface

Memory

Denoising and deconvolution super-resolution imaging apparatus based on photoswitchable molecules

Non-volatile memory

Denoising and deconvolution super-resolution imaging apparatus based on photoswitchable molecules

Electronic device

FIG. 6

## INTERNATIONAL SEARCH REPORT

International application No.

**PCT/CN2024/108945**

### A. CLASSIFICATION OF SUBJECT MATTER

G06T 3/4053(2024.01)i

According to International Patent Classification (IPC) or to both national classification and IPC

### B. FIELDS SEARCHED

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNTXT, WOTXT, EPTXT, USTXT, CNKI, IEEE: 亮, 暗, 亮态, 荧光态, 暗态, 超分辨, 成像, 结构, 光开关荧光, 开关, 切换, 荧光, state, off, on, super, resolution, STORM, PALM, switch+, Fluorescen+

### C. DOCUMENTS CONSIDERED TO BE RELEVANT

| Category* | Citation of document, with indication, where appropriate, of the relevant passages | Relevant to claim No. |
|---|---|---|
| X | CN 116721017 A (INSTITUTE OF BIOPHYSICS, CHINESE ACADEMY OF SCIENCES) 08 September 2023 (2023-09-08) description, paragraphs [0098]-[0100] | 1-8, 10-14 |
| A | CN 115293981 A (INSTITUTE OF BIOPHYSICS, CHINESE ACADEMY OF SCIENCES) 04 November 2022 (2022-11-04) entire document | 1-14 |
| A | CN 116805278 A (ZHEJIANG UNIVERSITY) 26 September 2023 (2023-09-26) entire document | 1-14 |
| A | EP 2265931 A1 (RUPRECHT-KARLS-UNIVERSITAET HEIDELBERG) 29 December 2010 (2010-12-29) entire document | 1-14 |
| A | JP 2023094290 A (OSAKA UNIVERSITY) 05 July 2023 (2023-07-05) entire document | 1-14 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 November 2024** | **19 November 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/108945**

| Patent document cited in search report | | | Publication date (day/month/year) | Patent family member(s) | | | Publication date (day/month/year) |
|---|---|---|---|---|---|---|---|
| CN | 116721017 | A | 08 September 2023 | None | | | |
| CN | 115293981 | A | 04 November 2022 | None | | | |
| CN | 116805278 | A | 26 September 2023 | None | | | |
| EP | 2265931 | A1 | 29 December 2010 | EP | 2265931 | B1 | 22 May 2013 |
| | | | | EP | 2265931 | B2 | 04 January 2017 |
| | | | | EP | 2265931 | B9 | 30 August 2017 |
| | | | | PL | 2265931 | T3 | 31 January 2014 |
| | | | | PL | 2265931 | T5 | 31 October 2017 |
| JP | 2023094290 | A | 05 July 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311839967